# EUROPEAN PATENT SPECIFICATION

(11) **EP 2 436 976 B1**
(45) Date of publication and mention of the grant of the patent: **31.07.2013**
(21) Application number: 11182465.2
(22) Date of filing: 23.09.2011
(51) Int. Cl.: F22G 5/18, F01K 25/08, F01K 13/02, F01K 23/06, F01K 23/10, F02G 5/00

(54) **Rankine cycle system**
Rankine-Zyklussystem
Système de cycle de Rankine

(30) Priority: 24.09.2010 JP 2010213465
(43) Date of publication of application: 04.04.2012
(73) Proprietor: KABUSHIKI KAISHA TOYOTA JIDOSHOKKI, Kariya-shi, Aichi 448-8671 (JP)
(72) Inventor: Enokijima, Fuminobu, Kariya-shi, Aichi 448-8671 (JP); Iguchi, Masao, Kariya-shi, Aichi 448-8671 (JP); Mori, Hidefumi, Kariya-shi, Aichi 448-8671 (JP)
(74) Representative: TBK

(56) References cited:
- JP-A- 2005 042 618
- JP-A- 2005 325 746
- US-A1- 2006 112 692
- US-A1- 2009 071 156
- US-A1- 2010 236 240

## Description

The present invention relates to a Rankine cycle system having a Rankine cycle circuit according to the preamble of claim 1, the features of which are known from document JP 2005 042 618 A.

A Rankin cycle circuit has been developed which converts heat discharged from an internal combustion engine into power for a motor generator. The Rankine cycle circuit has a boiler (heater) heating the working fluid in a liquid form at a constant pressure for generating overheated steam, an expansion device (fluid expansion device) adiabatically expanding the overheated steam for generating power, a condenser (cooling device) cooling the expanded steam at a constant pressure for condensing the steam into a liquid and a pump delivering the working fluid in a liquid condition to the boiler. The expansion device allows the working fluid to expand thereby to rotate the rotors of devices such as a turbine for converting the expansion energy of the working fluid into rotational power, and the rotational power is transferred as a power for the power generator.

When the working fluid fails to absorb sufficient heat in the boiler, however, the working fluid in a wet steam condition (air-liquid mixture condition) flows into the expansion device, or the liquid portion of the working fluid flows back into the expansion device. In the expansion device, the liquid portion of the working fluid flushes away the lubricating oil, decreases the viscosity of the lubricating oil by being mixed therewith, or corrodes the turbine by being attached thereto.

Japanese Patent Application Publication No. 8-68501 discloses a moisture separator generating a swirl of the wet steam for separating the moisture from the wet stream by centrifugal force. The moisture separator has a cylindrical duct through which wet steam flows and a nozzle disposed in the duct and formed by plural stator vanes. The moisture separator further has a turbine disposed in the duct at a position downstream of the nozzle as viewed in the flowing direction of the refrigerant and a compressor disposed at a position downstream of the turbine and rotatable with the turbine. Wet steam flowing through the duct is subjected to swirl flow developed by the nozzle. The swirl flow is strengthened by the turbine thereby to separate the liquid portion from the wet steam by centrifugal force. Then, the separated liquid is compressed by the compressor thereby to increase the degrees of dryness and superheat of the liquid.

However, the moisture separator of the above-mentioned Publication which has the duct and the nozzle, the turbine and the compressor all disposed in the duct is complicated in structure and hence costly to manufacture.

According to document US 2009/071156 A1, in a first step to start a Rankine cycle a temperature difference between the entrance of an expander machine and the exit of a condenser or the entrance of the pump, respectively, is used to determine a working capacity of the working fluid. If certain conditions are satisfied, in a next step, a pressure difference over the expansion machine is determined to verify whether the Rankine cycle already is in operation. The control according to this document is mainly based on the temperature difference between two points before and after a heating device, respectively.

According to document JP 2005 042 618 A, a Rankine cycle recovers heat from combustion gas exhausted from the engine, takes out a power from the heat recovered from an expansion machine, and radiates the heat remaining in an operating fluid which finished a pressure reduction expansion by the expansion machine, that is, the heat which has been heretofore discarded into the atmosphere, into a cooling water circuit of the engine, that is, the cooling water circuit in which the engine cooling water is circulated. Thus, the engine cooling water can be heated, and hence the thermal energy of the combustion gas can be effectively utilized in such manner that the warming-up time can be shortened, the engine temperature is raised to reduce a frictional loss in the engine and to complement a heating capacity deficiency in a heater and a defroster heater and others.

According to document JP 2005 325 746 A, a Rankine cycle is provided with a pump, a boiler, an expansion machine and a condenser commonly used with a refrigeration cycle, and a refrigerant is circulated therein. One end of a bypass line is provided on a suction side of the pump, while another end of the bypass line is connected to a delivery side of the pump. A flow rate regulating valve is provided in the bypass line. A temperature sensing tube detecting superheat of the refrigerant heated by the boiler is provided at the outlet of the boiler. The temperature sensing tube and the flow rate regulating valve are connected by a connection pipe. The connection pipe is filled with the same refrigerant as the one used in the Rankine cycle system.

It is the object of the invention to provide a Rankine cycle system having a simplified structure.

The object of the invention is achieved by a Rankine cycle system according to claim 1. Advantageous embodiments are carried out according to the dependent claims.

In accordance with the present invention, a Rankine cycle system mounted on a vehicle includes a Rankine cycle circuit, a pressure detector, a temperature detector and a controller. The Rankine cycle circuit through which working fluid circulates includes a fluid expansion device, a fluid transferring device, a first passage, a second passage, a heater, a cooling device, a bypass passage and a flow regulating valve. The fluid expansion device expands the working fluid for generating work. The fluid transferring device transfers the working fluid to the fluid expansion device. The first passage connects the fluid transferring device to the fluid expansion device. The second passage connects the fluid expansion device to the fluid transferring device. The heater is provided in the first passage for heating the working fluid. The cooling device is provided in the second passage for cooling the working fluid. The bypass passage connects the first passage to the second passage. The flow regulating valve is provided in the bypass passage for opening and closing the bypass passage. The pressure detector is provided in the first passage for detecting a pressure of the working fluid. The temperature detector is provided in the first passage between the heater and the fluid expansion device for detecting the temperature of the working fluid. The controller is connected to the flow regulating valve for controlling an operation of the flow regulating valve and to the pressure detector and the temperature detector for receiving signals of pressure and temperature from the pressure detector and the temperature detector. The controller controls the operation of the flow regulating valve based on a superheat degree of the working fluid calculated from the signals of the pressure and the temperature.

Other aspects and advantages of the invention will become apparent from the following description, taken in conjunction with the accompanying drawings, illustrating by way of example the principles of the invention.

The invention together with objects and advantages thereof, may best be understood by reference to the following description of the presently preferred embodiments together with the accompanying drawings in which:
Fig. 1 is an illustrative view showing a Rankine cycle system according to a first preferred embodiment of the present invention;
Fig. 2 is a p-h diagram of refrigerant the data of which is stored in an ECU of the Rankine cycle system of Fig. 1;
Fig. 3 is an illustrative view showing a Rankine cycle system according to a second preferred embodiment of the present invention; and
Fig. 4 is an enlarged illustrative view showing a flow regulating valve of the Rankine cycle system of Fig. 3.

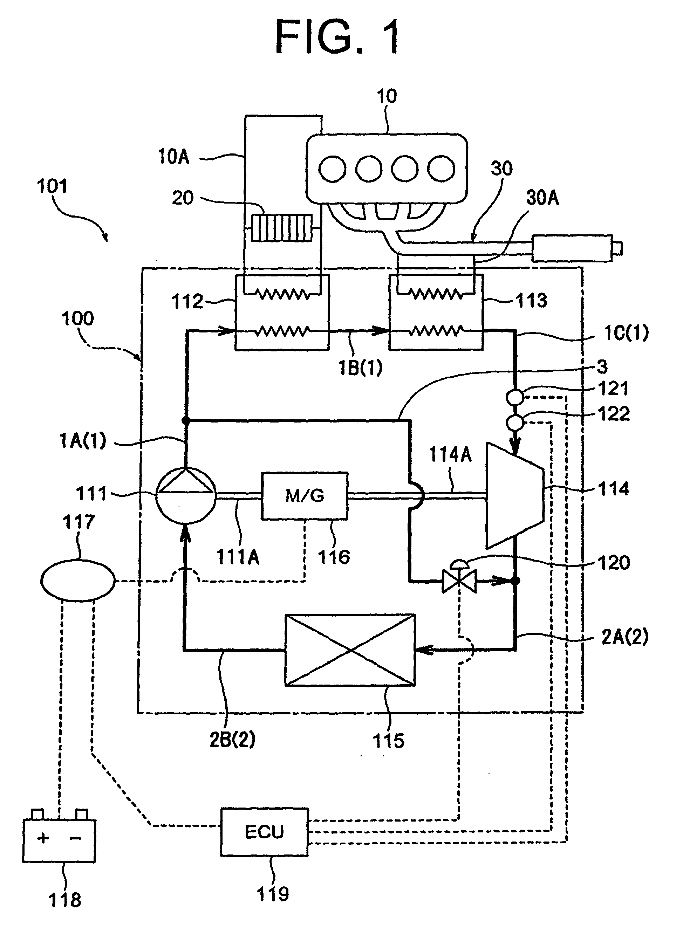

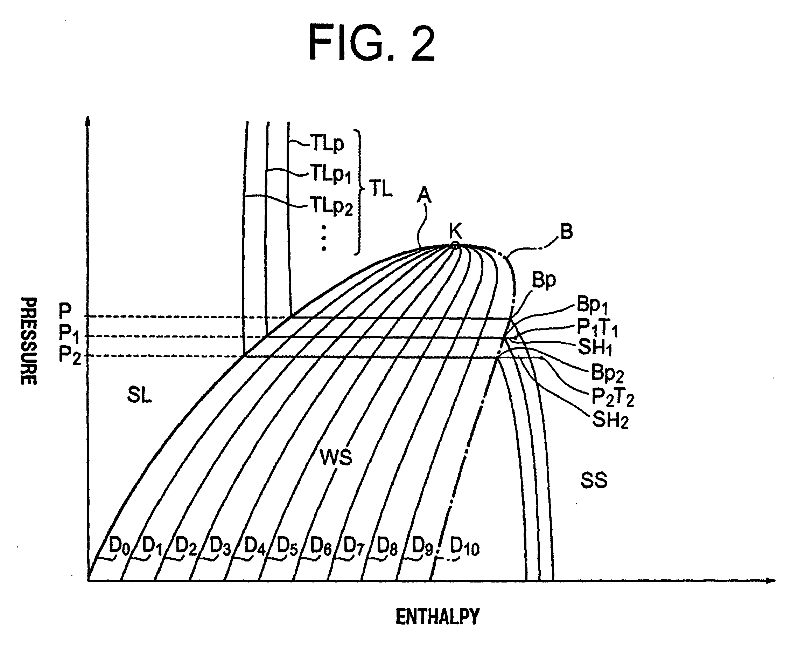

The following will describe a Rankine cycle system according to a first preferred embodiment of the present invention with reference to Figs. 1 and 2. The following description will deal with an example in which a Rankine cycle system is used for a vehicle having an internal combustion engine. Referring to Fig. 1, numeral 10 designates an engine which is equipped with a Rankine cycle system 101 having a Rankine cycle circuit 100.

The Rankine cycle circuit 100 has a pump 111, a cooling water boiler 112, a waste gas boiler 113, an expansion device 114 and a condenser 115. Refrigerant flows through the Rankine cycle circuit 100 as a working fluid. The pump 111 serves as a fluid transferring device of the present invention, the cooling water boiler 112 and the waste gas boiler 113 as a heater, the expansion device 114 as a fluid expansion device and the condenser 115 as a cooling device.

The pump 111 is operated to pump and transfer fluid, i.e. liquid refrigerant in the first preferred embodiment of the present invention. The pump 111 is connected at the outlet thereof (not shown) to the cooling water boiler 112 serving as a heat exchanger through a passage 1A, and the refrigerant transferred by the pump 111 flows through the cooling water boiler 112.

The cooling water boiler 112 is connected to a cooling water passage 10A in which a radiator 20 is connected and through which engine cooling water as the fluid heated by waste heat from the engine 10 flows. In the cooling water boiler 112, the refrigerant is heated through heat exchange with the engine cooling water. Engine cooling water transferred by a pump (not shown) from the engine 10 to the cooling water passage 10A flows through the cooling water boiler 112, in which the engine cooling water is cooled through heat exchange with the refrigerant in the cooling water boiler 112, and then the cooled engine cooling water returns to the engine 10. Meanwhile, the refrigerant is heated through heat exchange with the engine cooling water in the cooling water boiler 112.

The cooling water boiler 112 is connected at the outlet thereof to the waste gas boiler 113 serving as a heat exchanger through a passage 1B, and the refrigerant from the cooling water boiler 112 flows through the waste gas boiler 113. The waste gas boiler 113 is connected to a bypass passage 30A. The bypass passage 30A is a passage branched from and returned to an exhaust system 30 that discharges out of the vehicle exhaust gas as the fluid heated by waste heat from the engine 10. In the waste gas boiler 113, heat exchange is performed between refrigerant and the exhaust gas. Part of exhaust gas discharged into the exhaust system 30 from the engine 10 flows into the bypass passage 30A and then flows through the waste gas boiler 113, in which the exhaust gas is cooled through heat exchange with the refrigerant in the waste gas boiler 113. Then, the cooled exhaust gas returns to the exhaust system 30 and discharged out of the vehicle. Meanwhile, in the waste gas boiler 113, the refrigerant is heated through heat exchange with the exhaust gas whose temperature is higher than the engine cooling water. Thus, the temperature of the refrigerant is further increased.

The waste gas boiler 113 is connected at the outlet thereof to the inlet of the expansion device 114 through a passage 1C, so that the high-temperature and high-pressure refrigerant heated in the cooling water boiler 112 and the waste gas boiler 113 flows through the expansion device 114. The expansion device 114 expands the high-temperature and high-pressure refrigerant to rotate rotors of a device (not shown) such as a turbine and the drive shaft 114A of the expansion device 114, so that the driving force of the rotation generates work. The expansion device 114 is connected through the drive shaft 114A to the motor generator 116 operable as a power generator.

The motor generator 116 is connected to the pump 111 through a drive shaft 111A of the pump 111. In the motor generator 116, the drive shaft 111A of the pump 111 and the drive shaft 114A of the expansion device 114 are connected to each other so that the driving force of rotation thereof are transmitted to each other. The motor generator 116 is connected electrically to an inverter 117 that is operable as an inverter or a converter, and the inverter 117 is connected electrically to a vehicle battery 118.

Thus, the expansion device 114 drives to rotate the drive shaft 114A thereby to start the operation of the motor generator 116. Therefore, the motor generator 116 is operated as a power generator for generating AC power and providing the AC power to the inverter 117. In this case, the inverter 117 functions as a converter that converts the AC power into DC power and supplies the DC power to the vehicle battery 118. The DC power is stored in the vehicle battery 118, or the vehicle battery 118 is charged with the DC power.

When the inverter 117 functions as the inverter, DC power stored in the vehicle battery 118 is converted into AC power, and the AC power is supplied to the motor generator 116. Thus, the motor generator 116 is operable as a power generator. The passages 1 A, 1B and 1C form a first passage 1 of the Rankine cycle circuit 100.

The expansion device 114 is connected at the outlet thereof (not shown) to a condenser 115 serving as a heat exchanger through a passage 2A, and refrigerant flowing out from the expansion device 114 flows through the condenser 115. In the condenser 115, heat exchange is performed between the refrigerant flowing therethrough and ambient air. The refrigerant in the condenser 115 is cooled by the heat exchange with the ambient air thereby to be condensed. The condenser 115 is connected at the outlet thereof through a passage 2B to the inlet of the pump 111 (not shown). The liquid refrigerant flowing out from the condenser 115 is drawn into the pump 111, and the pump 111 transfers the refrigerant to the cooling water boiler 112 again. Therefore, refrigerant circulates in the Rankine cycle circuit 100. The passages 2A and 2B form a second passage 2 of the Rankine cycle circuit 100.

The Rankine cycle circuit 100 has a bypass passage 3 that connects the first passage 1 to the second passage 2. According to the first preferred embodiment of the present invention, one end of the bypass passage 3 is connected to the passage 1A of the first passage 1 and the other end of the bypass passage 3 is connected to the passage 2A of the second passage 2. A flow regulating valve 120 formed by an electromagnetic valve is provided in the bypass passage 3 for opening and closing the bypass passage 3 and controlling the flow passage area of the bypass passage 3.

The Rankine cycle system 101 has a pressure sensor 121 and a temperature sensor 122 disposed in the passage 1C of the first passage 1 at positions adjacent to the expansion device 114. The pressure sensor 121 and the temperature sensor 122 detect the pressure and the temperature of the refrigerant flowing through the passage 1C at positions just before the refrigerant flows into the expansion device 114, respectively. Since the pressure variation of refrigerant in the first passage 1 downstream of the connecting point between the first passage 1 and the bypass passage 3 is small, the pressure sensor 121 may be disposed anywhere in the first passage 1 downstream of the connection between the first passage 1 and the bypass passage 3. For example, the pressure sensor 121 may be disposed in the passage 1C at a position that is downstream of the connection between the passage 1A and the bypass passage 3, or in the passage 1B. The pressure sensor 121 serves as a pressure detector, and the temperature sensor 122 as a temperature detector of the present invention.

The ECU 119 is connected electrically to the flow regulating valve 120 and also to the inverter 117 for controlling the operation of the flow regulating valve 120 and the inverter 117, respectively. The ECU 119 is also connected electrically to the pressure sensor 121 and the temperature sensor 122 for receiving therefrom pressure data and the temperature data of refrigerant detected by the pressure sensor 121 and the temperature sensor 122, respectively.

The following will describe the operation of the Rankine cycle system 101 according to the first preferred embodiment of the present invention. Referring to Fig. 1, during the operation of the engine 10, engine cooling water in the engine 10 is transferred by a pump (not shown) for circulation in the cooling water passage 10A that connects the engine 10 and the cooling water boiler 112. Then, heat exchange is performed between the engine cooling water in the cooling water boiler 112 and refrigerant that circulates in the Rankine cycle circuit 100. Simultaneously, exhaust gas is discharged from the engine 10 into the exhaust system 30, and part of the exhaust gas in the exhaust system 30 flows through the bypass passage 30A and then returns to the exhaust system 30 to be discharged out of the vehicle with the exhaust gas flowing through the exhaust system 30. Thus, heat exchange is performed in the waste gas boiler 113 between the exhaust gas flowing in the bypass passage 30A and refrigerant circulating in the Rankine cycle circuit 100.

When the temperature of the exhaust gas being discharged from the engine 10 is increased higher than a predetermined level of temperature and also the temperature of the engine cooling water is increased higher than another predetermined level of temperature, the Rankine cycle circuit 100 is started. At this time, the inverter 117 is started to operate as the inverter by the ECU 119 so that DC power from the vehicle battery 118 is converted into AC power to be supplied to the motor generator 116 and the motor generator 116 is operated as the power generator.

The motor generator 116 drives to rotate the drive shaft 111A and the drive shaft 114A for driving the pump 111 and the expansion device 114, respectively. At this time, the flow regulating valve 120 in the bypass passage 3 is closed. The pump 111 driven by the motor generator 116 compresses liquid refrigerant at a constant temperature and transfers the compressed refrigerant to the cooling water boiler 112. Meanwhile, the expansion device 114 driven by the motor generator 116 rotates a rotor of the turbine (not shown) thereby to transfer refrigerant from the passage 1C to the passage 2A.

Low-temperature liquid refrigerant transferred by the pump 111 flows through the passage 1A to the cooling water boiler 112. In the cooling water boiler 112, the refrigerant is heated at a constant pressure through heat exchange with the engine cooling water circulating in the cooling water boiler 112, thereby being vaporized. As a result, the refrigerant becomes a gas-liquid mixture with a high-pressure and a relatively high-temperature.

The gas-liquid refrigerant flows out the cooling water boiler 112 and then enters into the waste gas boiler 113 through the passage 1 B. In the waste gas boiler 113, the refrigerant is heated at a constant pressure through heat exchange with the exhaust gas flowing through the waste gas boiler 113 and having a temperature that is higher than that of the engine cooling water, thereby being vaporized. As a result, the refrigerant becomes overheated steam with a high-temperature and high-pressure.

The overheated steam refrigerant flows out the waste gas boiler 113 and through the passage 1C and then enters into the expansion device 114. In the expansion device 114, the high-temperature and high-pressure overheated steam refrigerant is adiabatically expanded, and the expanding energy of the refrigerant in reducing its pressure is converted into rotational energy as regenerative energy. In the expansion device 114, a rotor (not shown) driven to rotate by the motor generator 116 receives additional rotational drive force generated by the above-described rotational energy, and the rotational drive force is transmitted through the drive shaft 114A to the motor generator 116 and the drive shaft 111A. The ECU 119 switches the operation of the inverter 117 as the inverter to the operation as the converter, so that power supply from the vehicle battery 118 to the motor generator 116 is stopped. The pump 111 is driven by the rotational drive force transferred from the expansion device 114 through the drive shaft 114A and the drive shaft 111A, and the motor generator 116 is driven as a power generator by the rotational drive force transferred from the expansion device 114 through the drive shaft 114A to generate AC power. The AC power generated by the motor generator 116 is converted into DC power by the inverter 117 and the DC power is charged in the vehicle battery 118.

The refrigerant flowing through the expansion device 114 is discharged out thereof as high-temperature and low-pressure refrigerant and flows through the passage 2A into the condenser 115. In the condenser 115, refrigerant is cooled at a constant pressure through heat exchange with ambient air around the condenser 115 thereby to be condensed into a liquid. The liquid refrigerant flows into the pump 111 through the passage 2B and then flows out from the pump 111. Thus, refrigerant circulates in the Rankine cycle circuit 100.

During the operation of the Rankine cycle circuit 100, the ECU 119 constantly receives pressure data and temperature data of refrigerant detected by the pressure sensor 121 and the temperature sensor 122, respectively. Data of the p-h diagram (Mollier diagram) in Fig. 2 is previously stored or calculated in the ECU 119. The ECU 199 calculates the superheat degree of refrigerant based on the stored or calculated data, and the data of pressure and temperature of refrigerant received from the pressure sensor 121 and the temperature sensor 122, respectively, and controls the operation of the flow regulating valve 120 based on the calculated superheat degree of refrigerant.

The following will describe the p-h diagram of Fig. 2 in detail. The p-h diagram shows a figure of Cartesian coordinate system, wherein the vertical axis represents the pressure of refrigerant and the horizontal axis the enthalpy of refrigerant. The region indicated by reference symbol SL represents the supercooled liquid region where the refrigerant is in the supercooled liquid phase, the region indicated by reference symbol WS represents the wet steam region where the refrigerant is in the wet steam phase, and the region indicated by reference symbol SS represents the superheated stream region where the refrigerant is in the superheated steam phase. The saturated liquid line as the border between the supercooled liquid region SL and the wet steam region WS is indicated by the solid line A having its critical point K at the apex of the solid line A, and the saturated vapor line as the border between the wet steam region WS and the superheated steam region SS is indicated by the dashed line B having its critical point K at the apex of the dashed line B.

The ECU 119 previously stores the data of the supercooled liquid region SL, the wet steam region WS, the superheated steam region SS, the saturation liquid line A, the dry saturated steam line B and isothermal lines TL including isothermal lines (not shown) for each temperature or configured to calculate the data. Receiving from the pressure sensor 121 a signal indicative of the pressure P of refrigerant, the ECU 119 calculates the coordinate of a point Bp on the dry saturated steam line B that corresponds to the pressure P and selects from isothermal lines TL the isothermal line TLp that passes through the point Bp. Then, the ECU 119 determines that the dry saturated steam temperature Tp on the selected isothermal line TLp is a temperature of refrigerant at the point Bp, or a dry saturated steam temperature of refrigerant at the pressure P. The ECU 119 also calculates the superheat degree SH from the temperature differential between the calculated dry saturated steam temperature Tp and the temperature T received from the temperature sensor 122 as well as the pressure P, as expressed by SH = T - Tp.

Then, the ECU 119 compares the superheat degree SH with a reference value SHt of superheat degree (for example 3 Kelvin in this preferred embodiment). The reference value SHt serves as a superheat degree reference value of the present invention. When the superheat degree SH is higher than the reference value SHt, the ECU 119 determines that refrigerant in the passage 1C is in a condition that is enough for the refrigerant to be a superheated steam, or the dryness degree of the refrigerant is sufficient, and controls such that the flow regulating valve 120 is kept closed. When the superheat degree SH is lower than the reference value SHt, on the other hand, the ECU 119 determines that refrigerant in the passage 1C is in a condition that is not enough for the refrigerant to be a superheated vapor, or has a insufficient dryness degree of refrigerant, and then controls such that the flow regulating valve 120 is opened.

The superheat degree and the dryness degree are related to each other. Specifically, when the superheat degree is zero or more, the dryness degree is one that is the maximum level thereof, and when the superheat degree is less than zero, the dryness degree is zero or more and less than one. Thus, the dryness degree is decreased with a decrease of the superheat degree. When the dryness degree is one, refrigerant is in the superheated steam phase or dry saturated steam phase, when the dryness degree is zero, refrigerant is in a supercooled liquid phase or saturated liquid phase, and when the dryness degree is more than zero and less than one, the refrigerant is in the wet steam phase. Thus, the controlling of the operation of the flow regulating valve 120 based on the calculated superheat degree of refrigerant is substantially the same as the controlling of the operation of the flow regulating valve 120 based on the dryness degree.

Returning back to Fig. 1, when the flow regulating valve 120 is opened, part of the high-pressure refrigerant delivered from a pump 111 into the passage 1A flows through the bypass passage 3 to the passage 2A through which the low-pressure refrigerant just after being decompressed by the expansion device 114 flows. The refrigerant flowing through the bypass passage 3 is merged at the passage 2A with the refrigerant flowing through the passages 1A, 1B and 1C and then flows into the condenser 115 with the refrigerant from the passages 1A, 1 B and 1C.

The flow rate of refrigerant flowing through the passages 1B and 1C is reduced and, therefore, the pressure of refrigerant in the passage 1C upstream of the expansion device 114 is also reduced. The flow rate of refrigerant heated by the cooling water boiler 112 and the waste gas boiler 113 is reduced and, therefore, the temperature of refrigerant flowing through the expansion device 114 is increased. The pressure detected by the pressure sensor 121 is decreased, and the temperature detected by the temperature sensor 122 is increased. The pressure differential between the inlet and the outlet of the expansion device 114 is decreased and, therefore, the load on the expansion device 114 is reduced. The opening of the flow regulating valve 120 is increased thereby to increase the flow passage area of the bypass passage 3, so that the flow rate of refrigerant flowing through the bypass passage 3 is increased. Thus, the amount of decrease in the pressure detected by the pressure sensor 121 is increased, and the amount of increase in the temperature detected by the temperature sensor 122 is increased.

Referring to Fig. 2, P1 depicts a first pressure detected by the pressure sensor 121 and T1 depicts a first temperature detected by the temperature sensor 122 and the ECU 119 calculates the first superheat degree SH1 based on the first pressure P1 and the first temperature T1 when the flow regulating valve 120 is closed. The pressure and the temperature at the point P1T1 on the p-h diagram of Fig. 2 corresponds to the first pressure P1 and the first temperature T1, respectively. Then, selecting from the isothermal lines TL the isothermal line TLp1 that passes through the point Bp1 located on the dry saturated steam line B and having the first pressure P1, the ECU 119 calculates the dry saturated steam temperature Tp1 and from which the first superheat degree SH1 is calculated, that is SH1=T1 - Tp1. When the first superheat degree SH1 is smaller than the reference value SHt, the ECU 119 causes the flow regulating valve 120 to open with an opening degree corresponding to the first superheat degree SH1 or to the difference between the reference value SHt and the first superheat degree SH1. That is, the smaller the first superheat degree SH1 is, the larger the opening of the flow regulating valve 120 is.

Consequently, the pressure detected by the pressure sensor 121 is decreased from the first pressure P1 to the second pressure P2, and the temperature detected by the temperature sensor 122 is increased from the first temperature T1 to the second temperature T2. The pressure and the temperature at the point P2T2 on the p-h diagram of Fig. 2 correspond to the second pressure P2 and the second temperature T2, respectively.

Selecting from the isothermal lines TL the isothermal line TLp2 that passes through the point Bp2 located on the dry saturated steam line B and having the second pressure P2, the ECU 119 calculates the dry saturated steam temperature Tp2 and from which a second superheat degree SH2 is calculated, that is SH2 = T2 - Tp2. The dry saturated steam temperature Tp2 is lower than the dry saturated steam temperature Tp1, or the temperature of the isothermal line TLp2 is lower than that of the isothermal line TLp1. The second superheat degree SH2 correlates with the distance between the point P2T2 and the point Bp2 on the p-h diagram of Fig. 2, and the first superheat degree SH1 correlates with the distance between the point P1T1 and the point Bp1 on the p-h diagram. Thus, the second superheat degree SH2 is larger than the first superheat degree SH1. As shown in the p-h diagram of Fig. 2, the superheat degree of refrigerant is increased even when the temperature of refrigerant is at a constant level and the pressure of refrigerant is decreased and when the pressure of refrigerant is at a constant level and the temperature of refrigerant is increased. According to the first preferred embodiment of the present invention, the amount of increase in the superheat degree is increased with a decrease of the refrigerant pressure and an increase of the refrigerant temperature, so that the control of the superheat degree is facilitated.

The ECU 119 compares the second superheat degree SH2 with the reference value SHt, and when the second superheat degree SH2 is larger than the reference value SHt, the opening of the flow regulating valve 120 is maintained. When the second superheat degree SH2 is smaller than the reference value SHt, on the other hand, the ECU 119 controls in such a way that the opening of the flow regulating valve 120 is increased, so that the flow rate of refrigerant flowing through the bypass passage 3 is increased.

Then, when the calculated superheat degree is higher than the reference value SHt, the opening of the flow regulating valve 120 is maintained, and when the calculated superheat degree is lower than the reference value SHt, the opening of the flow regulating valve 120 is further increased. The ECU 119 causes the flow regulating valve 120 to repeat the above adjustments until the superheat degree becomes higher than the reference value SHt. The ECU 119 repeats to caluculate the superheat degree while the opening of the flow regulating valve 120 is maintained. Additionally, the ECU 119 controls the operation of the flow regulating valve 120 in such a way that the superheat degree is kept higher than the reference value SHt.

Therefore, the ECU 119 controls the opening of the flow regulating valve 120 such that the superheat degree of refrigerant calculated from the refrigerant pressure and temperature received from the pressure sensor 121 and the temperature sensor 122, respectively, is higher than the reference value SHt.

The superheat degree of refrigerant may be changed due to any operating condition of the vehicle even through the opening of the flow regulating valve 120 is maintained constant, so that the superheat degree may become excessively large relative to the reference value SHt. Accordingly, the opening of the flow regulating valve 120 becomes excessively large and the flow rate of refrigerant flowing through the expansion device 114 becomes excessively small, with the result that the pressure differential between the inlet and outlet of the expansion device 114 becomes excessively small and the regeneration energy becomes excessively small. In order to reduce such decrease of the regeneration energy, any appropriate upper limit SHmax of the superheat degree may be set.

In this case, the ECU 119 may be operable to reduce the opening of the flow regulating valve 120 when the calculated superheat degree becomes larger than the upper limit SHmax, thereby to decrease the flow rate of refrigerant flowing through the bypass passage 3 and to increase the flow rate of refrigerant flowing through the passage 1C. When the calculated superheat degree is larger than the upper limit SHmax after the reduction of the opening of the flow regulating valve 120, the flow regulating valve 120 is adjusted for further reduction of its opening. The opening of the flow regulating valve 120 is maintained when the calculated superheat degree becomes lower than the upper limit SHmax. The ECU 119 causes the flow regulating valve 120 to perform the above adjustments repeatedly until the superheat degree becomes less than the upper limit SHmax. The ECU 119 calculates the superheat degree of refrigerant appropriately while the opening degree of the flow regulating valve 120 is being maintained and controls the opening of the flow regulating valve 120 such that the superheat degree is maintained to be smaller than the upper limit SHmax.

As described above, the Rankine cycle system 101 according to the first preferred embodiment of the present invention includes the Rankine cycle circuit 100 through which refrigerant flows, and the Rankine cycle circuit 100 has the expansion device 114 allowing refrigerant to expand thereby to generate work, the pump 111 transferring refrigerant to the expansion device 114, the first passage 1 connecting the pump 111 to the expansion device 114, the second passage 2 connecting the expansion device 114 to the pump 111, the cooling water boiler 112 and the waste gas boiler 113 provided in the first passage 1 for heating refrigerant, the condenser 115 provided in the second passage 2 for cooling refrigerant, the bypass passage 3 connecting the first passage 1 to the second passage 2 and the flow regulating valve 120 provided in the bypass passage 3 for opening and closing the bypass passage 3. The Rankine cycle system 101 has the pressure sensor 121 disposed in the first passage 1 for detecting the pressure of refrigerant, the temperature sensor 122 disposed in the first passage 1 between the waste gas boiler 113 and the expansion device 114 for detecting the temperature of refrigerant and the ECU 119 connected with the flow regulating valve 120 for controlling the operation of the flow regulating valve 120 and to the pressure sensor 121 and the temperature sensor 122 for receiving therefrom signals of the pressure and the temperature detected by the pressure sensor 121 and the temperature sensor 122, respectively. The ECU 119 controls the operation of the flow regulating valve 120 based on the calculated superheat degree from the above signals of the pressure and temperature. The bypass passage 3 connects the first passage 1 extending between the pump 111 and the cooling water boiler 112 to the second passage 2.

In the Rankine cycle system 101, when the flow regulating valve 120 is opened, refrigerant flows through the bypass passage 3, so that the flow rate of refrigerant flowing into the expansion device 114 is decreased. Thus, the pressure of refrigerant flowing into the expansion device 114 detected by the pressure sensor 121 is decreased. The flow rate of refrigerant flowing through the cooling water boiler 112 and the waste gas boiler 113 to the expansion device 114 is decreased, so that the temperature of refrigerant flowing into the expansion device 114 detected by the temperature sensor 122 is increased. Since the refrigerant flowing through the expansion device 114 is in the vapor phase, the superheat degree of refrigerant may be increased by decreasing the pressure of refrigerant and/or increasing the temperature of refrigerant. Adjusting the opening of the flow regulating valve 120 to control the pressure and temperature of refrigerant flowing through the expansion device 114 and hence the superheat degree of refrigerant, the refrigerant may be maintained in the superheated steam phase or in the dry saturated steam phase, so that flow of liquid refrigerant back to the expansion device 114 is prevented. Flow of liquid refrigerant back to the expansion device 114 may be prevented merely by providing the bypass passage 3 and the flow regulating valve 120. Thus, a structure of the Rankine cycle system 101 that prevents reverse flow of liquid refrigerant into the expansion device 114 may be simplified. The pressure sensor 121 and the temperature sensor 122 may be disposed at a position where the pressure and temperature of refrigerant flowing into the expansion device 114 may be detected, preferably at a position adjacent to the inlet of the expansion device 114.

The ECU 119 causes the flow regulating valve 120 to be opened when the superheat degree of refrigerant calculated from the monitored pressure and temperature of refrigerant is lower than the reference value SHt. When the reference value SHt is set larger than zero, the refrigerant whose superheat degree is at the reference value SHt is in the superheated steam phase that is yet to be in the dry saturated steam phase. Controlling so that the superheat degree of refrigerant is larger than the reference value SHt, the refrigerant may be maintained stably in the superheated vapor phase. This may forestall the dryness degree of refrigerant from being smaller than one or the superheat degree of refrigerant from being smaller than zero. Compared to a case where the dryness degree of refrigerant in the dry saturated steam phase or in the superheated steam phase is one, it may be possible to ensure safety to the flow back of the liquid refrigerant by controlling the phase of refrigerant by introducing a threshold value to the superheat degree represented by numerals corresponding to the respective phases of refrigerant of the dry saturated vapor phase and the superheated vapor phase.

In the Rankine cycle system 101, when the superheat degree of refrigerant is less than the reference value SHt, the ECU 119 controls in such a way that the opening of the flow regulating valve 120 is increased with a decrease of the superheat degree of refrigerant, thereby increasing the flow rate of refrigerant flowing through the bypass passage 3. Thus, the ECU 119 controls the Rankine cycle system 101 such that the smaller the calculated superheat degree of refrigerant is, the larger the decrease of pressure of refrigerant and the increase of temperature of refrigerant are, thereby increasing the superheat degree of refrigerant effectively to be larger than the reference value SHt.

In the Rankine cycle circuit 100 of the Rankine cycle system 101, the bypass passage 3 connects the first passage 1 between the pump 111 and the cooling water boiler 112 to the second passage 2. Since the refrigerant allowed to flow through the bypass passage 3 is before being heated and hence has high density, the flow rate of refrigerant in the bypass passage 3 may be ensured appropriately even when the bypass passage 3 is formed with a small diameter and the flow regulating valve 120 is made relatively small. In other words, the bypass passage 3 and the flow regulating valve 120 may be formed small. Since all refrigerant heated by the cooling water boiler 112 and the waste gas boiler 113 is made to flow through the expansion device 114, the thermal energy received from the cooling water boiler 112 and the waste gas boiler 113 may be utilized effectively for conversion into expansion energy of refrigerant in the expansion device 114 without being wasted. Thus, the heat received from the cooling water boiler 112 and the waste gas boiler 113 may be utilized effectively in the Rankine cycle system 101.

In the Rankine cycle circuit 100 of the Rankine cycle system 101, the bypass passage 3 connects the first passage 1 to the second passage 2 between the expansion device 114 and the condenser 115. Thus, all refrigerant in the second passage 2 flows through the condenser 115 to be cooled. This may reduce the shortage of subcooled refrigerant transferred into the pump 111 and, therefore, the pump 111 may be prevented from cavitation.

The following will describe a Rankine cycle system 201 according to a second preferred embodiment of the present invention.
The second preferred embodiment differs from the first preferred embodiment in that a flow regulating valve is disposed in the bypass passage 3 in place of the flow regulating valve 120. The following description will use the same reference numerals for the common elements or components in the first and the second embodiments, and the description of such elements or components will be omitted.

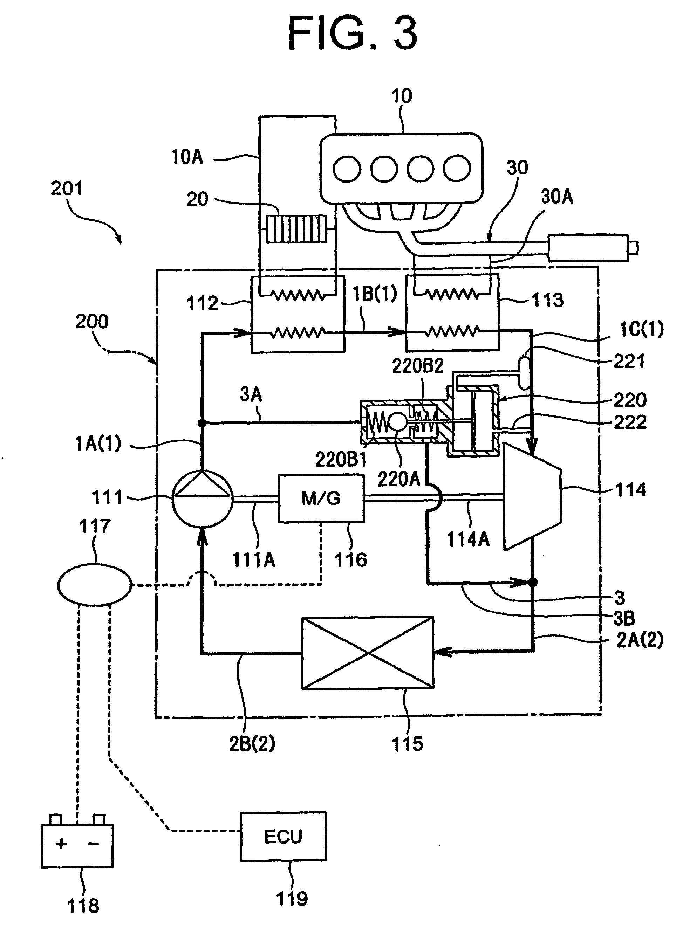

Referring to Fig. 3, the Rankine cycle system 201 of the second embodiment has a Rankine cycle circuit 200 having the aforementioned flow regulating valve 220 in the bypass passage 3 and a temperature sensitive cylinder 221 disposed in the passage 1C at a position adjacent to the expansion device 114. The flow regulating valve 220 is operable to connect and disconnect between the passage 3A that is connected to the passage 1A and the passage 3B that is connected to the passage 2A for adjusting the flow passage area between the passage 3A and the passage 3B.

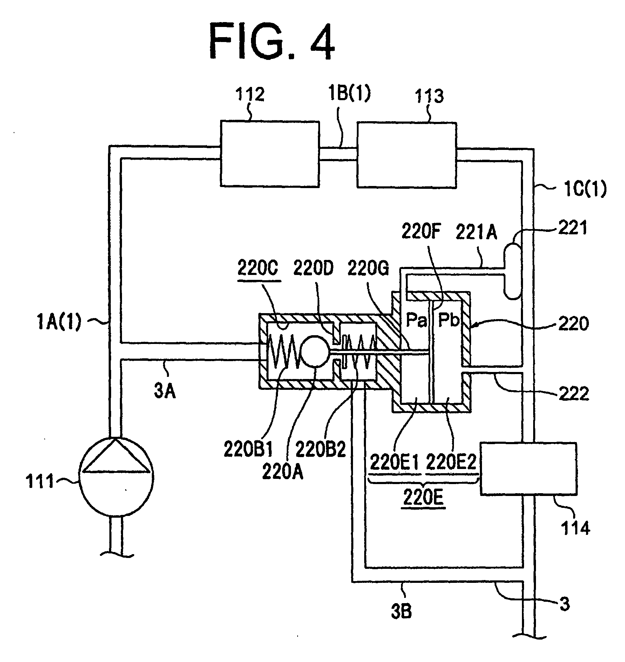

The structure of the flow regulating valve 220 is shown in detail in Fig. 4. The flow regulating valve 220 has formed therein a valve chamber 220C connecting the passage 3A to the passage 3B of the bypass passage 3. The flow regulating valve 220 further has in the valve chamber 220C a valve seat 220D, and a valve body 220A disposed on the passage 3A side of the valve seat 220D, a first spring 220B1 for urging the valve body 220A toward the valve seat 220D and a second spring 220B2 for urging the valve body 220A away from the valve seat 220D. The flow regulating valve 220 further has therein a connecting shaft 220G extending along the urging direction of the first spring 220B1 and connected at one end thereof to the valve body 220A and at the other end thereof to a diaphragm 220F The second spring 220B2 urges the connecting shaft 220G with the valve body 220A.

As appreciated from Fig. 4, the fluid communication between the passage 3A and the passage 3B is blocked or the bypass passage 3 is closed when the valve body 220A is seated on the valve seat 220D, and the passage 3A is in communication with the passage 3B or the bypass passage 3 is opened when the valve body 220A is moved away from the valve seat 220D. The flow regulating valve 220 has formed therein a pressure chamber 220E isolated from the valve chamber 220C and positioned on the side of the flow regulating valve 220 toward which the valve body 220A is moved by the first spring 220B1.

The pressure chamber 220E is divided into the first and second pressure chambers 220E1 and 220E2 by the aforementioned diaphragm 220F that is disposed in the pressure chamber 220E, extending in the direction perpendicular to the urging directions of the first and second springs 220B1 and 220B2. The first and second pressure chambers 220E1 and 220E2 are formed in side-by-side relation to each other along the urging direction of the first spring 220B1 in this order. The connecting shaft 220G extends through the pressure chamber 220E and is connected to the diaphragm 220F. The diaphragm 220F is movable with the valve body 220A along the urging directions of the first and second springs 220B1 and 220B2.

The first pressure chamber 220E1 is connected to the temperature sensitive cylinder 221 through a passage 221A, and the second pressure chamber 220E2 is connected to the passage 1C through a communication passage 222 at a position that is adjacent to the temperature sensitive cylinder 221. Thus, part of the refrigerant flowing through the Rankine cycle circuit 100 flows into the second pressure chamber 220E2, and the temperature and the pressure (pressure Pb) of the refrigerant in the second pressure chamber 220E2 are substantially the same as those of the refrigerant in the passage 1C. The communication passage 222 serves as the pressure detector of the present invention.

The temperature sensitive cylinder 221 is filled with refrigerant of the same type of refrigerant circulating in the Rankine cycle circuit 100 as the temperature sensitive fluid. The refrigerant in the temperature sensitive cylinder 221 is in the air-liquid mixture condition. The temperature of the refrigerant contained in the temperature sensitive cylinder 221 and used to sense the temperature of the refrigerant in the passage 1C can be substantially the same as that of the refrigerant in the passage 1C. Thus, the temperature of the refrigerant in the temperature sensitive cylinder 221 and in the first pressure chamber 220E1 is substantially the same as that of the refrigerant in the passage 1C, and the pressure of the refrigerant (pressure Pa) is of saturated steam pressure that corresponds to the temperature of the refrigerant in the passage 1C. The temperature sensitive cylinder 221 serves as the temperature detector of the present invention.

Referring to the isothermal lines TL of Fig. 2, the pressure of refrigerant in the air-liquid mixture phase (wet vapor phase) is substantially the same as the saturated vapor pressure of refrigerant and higher than the pressure of refrigerant in the superheated vapor phase when the temperature of refrigerant is at a constant level. The pressure Pa of the first pressure chamber 220E1 is higher than the pressure Pb of the second pressure chamber 220E2 by an amount influenced by the superheat degree of refrigerant in the passage 1C. Thus, the superheat degree of refrigerant in the passage 1C is determined by the difference between the pressures Pa and Pb (i.e. Pa - Pb). When the pressure differential corresponding to the reference value SHt of superheat degree is represented by a reference value Pdt and the superheat degree of refrigerant in the passage 1C is larger than the reference value SHt, the pressure differential (Pa - Pb) is larger than the reference value Pdt. The reference value Pdt serves as a pressure differential reference value of the present invention.

The flow regulating valve 220 is operated such that when the pressure differential (Pa - Pb) is at the reference value Pdt, the force resulting from the urging force of the first spring 220B1 acting in the direction that closes the valve body 220A and the urging force of the pressure differential (Pa -Pb) acting on the valve body 220A through the diaphragm 220F and the connecting shaft 220G in the direction that closes the valve body 220A is substantially the same as the urging force of the second spring 220B2 in the direction that opens the valve body 220A.

Thus, when the pressure differential (Pa - Pb) is larger than the reference value Pdt, the resultant force of the urging force of the first spring 220B1 and the pressure differential (Pa - Pb) is greater than the urging force of the second spring 220B2, so that the valve body 220A is closed and, therefore, fluid communication between the passage 3A and the passage 3B is blocked. Meanwhile, when the pressure differential (Pa - Pb) is smaller than the reference value Pdt, the resultant force of the urging force of the first spring 220B1 and the pressure differential (Pa ― Pb) is larger than the urging force of the second spring 220B2, the valve body 220A is opened and, therefore, the passage 3A is in communication with the passage 3B. The flow regulating valve 220 is operated to be opened when the pressure differential (Pa - Pb) is smaller than the reference value Pdt. Furthermore, the flow regulating valve 220 is further operated to be opened when the pressure differential (Pa - Pb) is smaller than the predetermined value Pdt, the smaller the pressure differential (Pa - Pb) is, or the smaller the superheat degree of refrigerant is, the larger the opening of the valve body 220A is, so that the flow rate of refrigerant flowing in the bypass passage 3 is increased and the amount of increase in the superheat degree of refrigerant flowing in the passage 1C is increased.

Thus, the flow regulating valve 220 may detect the superheat degree of refrigerant based on the temperature of refrigerant detected by the temperature sensitive cylinder 221 and also the pressure of the refrigerant and control the opening of the valve body 220A in accordance with the detected superheat degree of refrigerant. The flow regulating valve 220 may adjust the superheat degree of refrigerant at which the valve body 220A is opened and the opening of the valve body 220A in accordance with the superheat degree of refrigerant by changing the strength of the first spring 220B1 and the second spring 220B2. Therefore, the flow regulating valve 220 has the same functions as that of the ECU 119 of the first preferred embodiment and further has a function to control the superheat degree of the refrigerant flowing in the passage 1C is larger than the reference value SHt without being controlled by the ECU 119 as in the case of the flow regulating valve 120 of the first preferred embodiment. In other words, the flow regulating valve 220 doubles as the ECU 119 operated based on a pressure differential between a pressure of the working fluid in the communication passage 222 and a pressure of the temperature sensitive fluid in the temperature sensitive cylinder 221 in accordance with the superheat degree SH of the working fluid

The rest of the structure and operation of the Rankine cycle system 201 according to the second preferred embodiment is substantially the same as the Rankine cycle system 101 according to the first preferred embodiment and, therefore, the description thereof is omitted. The Rankine cycle system 201 according to the second preferred embodiment offers the same advantageous effects as the Rankine cycle system 101 according to the first preferred embodiment.

In the Rankine cycle systems 101 and 201 of the first and second preferred embodiments of the present invention, the connection point of the bypass passage 3 is not limited to the illustration shown in Figs. 1 and 3. The bypass passage 3 may be connected to the first passage 1 at a position that is upstream of the cooling water boiler 112 or the waste gas boiler 113, or to the passage 1A or the passage 1B, so that refrigerant flowing through the bypass passage 3 is reduced thereby to reduce the flow rate of the refrigerant flowing through the cooling water boiler 112 and/or the waste gas boiler 113 and hence to reduce the amount of refrigerant flowing in the expansion device 114. Thus, the connecting the first passage 1 between the pump 111 and the cooling water boiler 112 to the second passage 2 by the bypass passage 3 means that the bypass passage 3 may be connected at one end thereof to the first passage 1 and at the other end thereof to a point between the pump 111 and the cooling water boiler 112 or to a point between the pump 111 and the waste gas boiler 113. The bypass passage 3 may be also connected to the second passage 2 at the passage 2A or 2B.

In the Rankine cycle systems 101 and 201 according to the first and second preferred embodiments of the present invention, the bypass passage 3 may be connected to the first passage 1 at the passage 1C. In this case, allowing the refrigerant to flow through the bypass passage 3, the pressure of refrigerant in the passage 1C is reduced. Referring to the p-h diagram of Fig. 2, the pressure of refrigerant in the steam phase when the temperature of the refrigerant is at a constant level, thereby increasing the superheat degree of refrigerant. Thus, refrigerant is made to flow through the bypass passage 3, so that the superheat degree of refrigerant allowing refrigerant to flow through the bypass passage 3, the superheat degree of refrigerant flowing from the passage 1C into the expansion device 114 may be increased. In the Rankine cycle systems 101 and 201 according to the first and second preferred embodiments of the present invention, a plurality of bypass passages may be provided in the Rankine cycle circuit.

In the Rankine cycle systems 101 and 201 according to the first and second preferred embodiments of the present invention, the pump 111, the motor generator 116 and the expansion device 114 are connected to one another, but the present invention is not limited to such structure. Only the motor generator 116 and the expansion device 114 may be connected to each other. In such a case, the pump 111 may be configured to be driven by power from the vehicle battery 118 or power from the engine 10 through a driving belt. This eliminates the influence of the operation of the pump 111 on the operation of the expansion device 114. Thus, for controlling the superheat degree of the refrigerant flowing through the expansion device 114, the flow rate of the refrigerant flowing into the expansion device 114 through the cooling water boiler 112 and the waste gas boiler 113 may be controlled by adjusting the flow rate of refrigerant flowing out from the pump 111 in addition to allowing the refrigerant to flow through the bypass passage 3.

In the Rankine cycle system 101 according to the first preferred embodiment of the present invention, the ECU 119 may control the flow regulating valve 120 based on only the temperature of refrigerant detected by the temperature sensor 122. In the Rankine cycle system 101 according to the first preferred embodiment of the present invention, the pump 111 and the expansion device 114 are connected through the drive shafts 111A and 114A, and the drive shafts 111A and 114A are connected to each other such that the pump 111 and the expansion device 114 rotate at the same speed. In this structure, the pressure variation of refrigerant in the first passage 1 becomes smaller to fall within a predetermined range including the pressure corresponding to the rotational speed of the pump 111 and the expansion device 114. Thus, the predictive levels of the pressure of the refrigerant in the first passage 1 corresponding to the rotational speed of the pump 111 and the expansion device 114 may be set and stored in the ECU 119. Therefore, the ECU 119 may calculate the superheat degree of refrigerant based on the temperature data of refrigerant from the temperature sensor 122 and the pressure data of refrigerant stored in the ECU 119 and control the flow regulating valve 120 based on the calculated superheat degree of refrigerant.

In the Rankine cycle system 101 according to the first preferred embodiment of the present invention, the dryness degree of refrigerant may be calculated by ECU 119 directly from the pressure and temperature of refrigerant from the pressure sensor 121 and the temperature sensor 122, respectively. In this case, the dryness degree of refrigerant may be calculated by the ECU 119 based on the determination in which of the supercooled liquid region SL, the wet steam region WS and the superheated steam region SS the refrigerant falls by utilizing the p-h diagram of Fig. 2. The dryness degree of refrigerant is one when the refrigerant is within the superheated steam region SS and also on the dry saturated steam line B, zero when the refrigerant is within the supercooled liquid region SL and also on the saturation liquid line A and larger than zero and smaller than one in the wet steam region WS.

As shown in the p-h diagram of Fig. 2, a dryness degree line when the dryness degree is zero is shown by a dryness degree line D0 as the saturated steam line A and a dryness degree line when the dryness degree is one is shown by a dryness degree line D10 as the dry saturated steam line B. Similarly, the dryness degree lines when the dryness degrees are 0.1, 0.2, 0.3, 0.4, 0.5, 0.6, 0.7, 0.8 and 0.9 are shown by dryness degree lines D1, D2, D3, D4, D5, D6, D7, D8 and D9 in the wet steam region WS, respectively. The ECU 119 may store data of the respective dryness degree lines, or the data may be calculated by ECU 119, so that the dryness degree of refrigerant may be calculated in more detail by the ECU 119.

The ECU 119 may be operable to control such that the flow regulating valve 120 is opened when the dryness degree of refrigerant determined by the calculation as describe above is smaller than one, and also that the opening of the flow regulating valve 120 is decreased with a decrease of the dryness degree.

In the Rankine cycle systems 101 and 201 according to the first and second preferred embodiments of the present invention, the motor generator 116 may replaced by an alternator and the inverter 117 may replaced by a regulator. In this configuration, the alternator may be connected to the pump 111 and the expansion device 114 through a drive belt.

A Rankine cycle system mounted on a vehicle includes a Rankine cycle circuit, a pressure detector, a temperature detector and a controller. The Rankine cycle circuit includes a fluid expansion device, a fluid transferring device, first and second passages, a heater, a cooling device, a bypass passage and a flow regulating valve. The bypass passage connects the first passage and the second passage, and in which the flow regulating valve is provided for opening and closing the bypass passage. The controller is connected to the flow regulating valve for controlling an operation of the flow regulating valve and to the pressure and temperature detectors and for receiving signals of pressure and temperature from the pressure and temperature detectors, respectively. The controller controls the operation of the flow regulating valve based on a superheat degree of the working fluid calculated from the signals of the pressure and temperature.

## Claims

1. A Rankine cycle system (101, 201) mountable on a vehicle comprising:
a Rankine cycle circuit (100, 200) through which working fluid circulates, the Rankine cycle circuit (100, 200) including:
a fluid expansion device (114) expanding the working fluid for generating work;
a fluid transferring device (111) transferring the working fluid to the fluid expansion device (114);
a first passage (1) connecting the fluid transferring device (111) to the fluid expansion device (114);
a second passage (2) connecting the fluid expansion device (114) to the fluid transferring device (111);
a heater (112, 113) provided in the first passage (1) for heating the working fluid;
a cooling device (115) provided in the second passage (2) for cooling the working fluid;
a bypass passage (3) connecting the first passage (1) to the second passage (2); and
a flow regulating valve (120, 220) provided in the bypass passage (3) for opening and closing the bypass passage (3),
a pressure detector (121, 222) provided in the first passage (1) for detecting a pressure of the working fluid;
a temperature detector (122, 221) provided in the first passage (1) between the heater (112, 113) and the fluid expansion device (114) for detecting the temperature of the working fluid; and
a controller (119, 220) connected to the flow regulating valve (120, 220) for controlling an operation of the flow regulating valve (120, 220) and to the pressure detector (121, 222) and the temperature detector (122, 221) capable of receiving signals of pressure and temperature from the pressure detector (121, 222) and the temperature detector (122, 221),
**characterized in that**
the controller (119) is adapted to control the operation of the flow regulating valve (120, 220) based on a superheat degree (SH) of the working fluid calculated from the signals of the pressure detector (121, 222) and the temperature detector (122, 221), and **in that** the bypass passage (3) connects the first passage (1) to the second passage (2) between the fluid expansion device (114) and the cooling device (115).

2. The Rankine cycle system (101) according to claim 1, **characterized in that** the controller (119) is adapted to cause the flow regulating valve (120) to be opened when the superheat degree (SH) of the working fluid is lower than a superheat degree reference value (SHt).

3. The Rankine cycle system (101) according to claim 1 or 2, **characterized in that** the controller (119) is adapted to control in such a way that the opening of the flow regulating valve (120) is increased with a decrease of the superheat degree (SH) of the working fluid when the superheat degree (SH) of the working fluid is smaller than the superheat degree reference value (SHt), thereby increasing a flow rate of the working fluid flowing through the bypass passage (3).

4. The Rankine cycle system (201) according to claim 1, **characterized in that** the pressure detector (222) is a communication passage connecting the first passage (1) to the flow regulating valve (220), the temperature detector (221) is a temperature sensitive cylinder connected to the flow regulating valve (220) and adapted to be filled with temperature sensitive fluid of the same type of the working fluid circulating in the Rankine cycle circuit (200) in an air-liquid mixture phase, and the flow regulating valve (220) doubles as the controller operated based on a pressure differential between a pressure of the working fluid in the communication passage and a pressure of the temperature sensitive fluid in the temperature sensitive cylinder in accordance with the superheat degree (SH) of the working fluid.

5. The Rankine cycle system (201) according to claim 4, **characterized in that** the flow regulating valve (220) is adapted to be operated to be opened when the pressure differential is smaller than a pressure differential reference value (Pdt).

6. The Rankine cycle system (201) according to claim 4 or 5, **characterized in that** the opening of the flow regulating valve (220) is adapted to be increased with a decrease of the superheat degree (SH) of the working fluid when the pressure differential is smaller than the second reference value (Pdt), thereby increasing the flow rate of the working fluid flowing through the bypass passage (3).

7. The Rankine cycle system (101, 201) according to any one of claims 4 through 6, **characterized in that** the flow regulating valve (220) includes:
a valve chamber (220C) provided in the bypass passage (3), the valve chamber (220C) including:
a valve seat (220D);
a valve body (220A) configured such that the bypass passage (3) is closed when the valve body (220A) is seated on the valve seat (220D) and the bypass passage (3) is opened when the valve body (220A) is moved away from the valve seat (220D);
a first spring (220B1) urging the valve body (220A) toward the valve seat (220D) for seating the valve body (220A) on the valve seat (220D); and
a second spring (220B2) urging the valve body (220A) away from the valve seat (220D),
a pressure chamber (220E) includes:
a first pressure chamber (220E1);
a second pressure chamber (220E2); and
a diaphragm (220F) dividing the pressure chamber (220E) into the first pressure chamber (220E1) and the second pressure chamber (220E2),
a connecting shaft (220G) extending thorough the valve chamber (220C) and the pressure chamber (220E) and connected to the valve body (220A) and the diaphragm (220F), the connecting shaft (220G) urged by the second spring (220B2).

## Patentansprüche

1. Rankine-Zyklussystem (101, 201), das an einem Fahrzeug montierbar ist, mit:
einem Rankine-Zykluskreislauf (100, 200), durch den ein Arbeitsfluid zirkuliert, wobei der Rankine-Zykluskreislauf (100, 200) hat:
ein Fluidexpansionsgerät (114), das das Arbeitsfluid zum Erzeugen einer Arbeit expandiert;
ein Fluidübertragungsgerät (111), das das Arbeitsfluid zu dem Fluidexpansionsgerät (114) überträgt;
einen ersten Durchtritt (1), der das Fluidübertragungsgerät (111) mit dem Fluidexpansionsgerät (114) verbindet;
einen zweiten Durchtritt (2), der das Fluidexpansionsgerät (114) mit dem Fluidübertragungsgerät (111) verbindet;
einen Heizer (112, 113), der in dem ersten Durchtritt (1) bereitgestellt ist, um das Arbeitsfluid zu heizen;
einem Kühlgerät (115), das in dem zweiten Durchtritt (2) bereitgestellt ist, um das Arbeitsfluid zu kühlen;
einen Umgehungsdurchtritt (3), der den ersten Durchtritt (1) mit dem zweiten Durchtritt (2) verbindet; und
einem Strömungsregelungsventil (120, 220), das in dem Umgehungsdurchtritt (3) bereitgestellt ist, um den Umgehungsdurchtritt (3) zu öffnen und zu schließen,
einem Druckdetektor (121, 222), der in dem ersten Durchtritt (1) bereitgestellt ist, um einen Druck des Arbeitsfluids zu erfassen;
einem Temperaturdetektor (122, 221), der in dem ersten Durchtritt (1) zwischen dem Heizer (112, 113) und dem Fluidexpansionsgerät (114) bereitgestellt ist, um die Temperatur des Arbeitsfluids zu erfassen; und
einer Steuerung (119, 220), die mit dem Strömungsregulierungsventil (120, 220) verbunden ist, um eine Betätigung des Strömungsregulierungsventils (120, 220) zu steuern, und mit dem Druckdetektor (121, 222) und dem Temperaturdetektor (122, 221) verbunden ist, und in der Lage ist, Signale des Drucks und der Temperatur von dem Druckdetektor (121, 222) und dem Temperaturdetektor (122, 221) zu empfangen,
**dadurch gekennzeichnet, dass**
die Steuerung (119) angepasst ist, die Betätigung des Strömungsregulierungsventils (120, 220) ausgehend von einem Überheizungsgrad (SH) des Arbeitsfluids zu steuern, der aus den Signalen des Druckdetektors (121, 222) und des Temperaturdetektors (122, 221) berechnet ist, und dadurch, dass der Umgehungsdurchtritt (3) den ersten Durchtritt (1) zwischen dem Fluidexpansionsgerät (114) und dem Kühlgerät (115) mit dem zweiten Durchtritt (2) verbindet.

2. Rankine-Zyklussystem (101) nach Anspruch 1, **dadurch gekennzeichnet, dass** die Steuerung (119) angepasst ist, zu verursachen, dass das Strömungsregulierungsventil (120) geöffnet wird, wenn der Überheizungsgrad (SH) des Arbeitsfluids niedriger als ein Überheizungsgradbezugswert (SHt) ist.

3. Rankine-Zyklussystem (101) nach Anspruch 1 oder 2, **dadurch gekennzeichnet, dass** die Steuerung (119) angepasst ist, in einer derartigen Weise zu steuern, dass die Öffnung des Strömungsregulierungsventils (120) mit einem Absinken des Überheizungsgrads (SH) des Arbeitsfluids erhöht wird, wenn der Überheizungsgrad (SH) des Arbeitsfluids kleiner als der Überheizungsgradbezugswert (SHt) ist, und dabei eine Strömungsrate des Arbeitsfluids erhöht, das durch den Umgehungsdurchtritt (3) strömt.

4. Rankine-Zyklussystem (201) nach Anspruch 1, **dadurch gekennzeichnet, dass** der Druckdetektor (222) ein Verbindungsdurchtritt ist, der den ersten Durchtritt (1) mit dem Strömungsregulierungsventil (220) verbindet, der Temperaturdetektor (221) ein temperaturempfindlicher Zylinder ist, der mit dem Strömungsregulierungsventil (220) verbunden ist, und angepasst ist, mit dem temperaturempfindlichen Fluid von der gleichen Art wie das Arbeitsfluid gefüllt zu werden, das in dem Rankine-Zykluskreislauf (200) zirkuliert, in einer Luft-Flüssigkeits-Gemischphase gefüllt zu werden, und das Strömungsregulierungsventil (220) verdoppelt, wenn die Steuerung ausgehend von einem Druckunterschied zwischen einem Druck des Arbeitsfluids in dem Verbindungsdurchtritt und einem Druck des temperaturempfindlichen Fluids in dem temperaturempfindlichen Zylinder gemäß dem Überheizungsgrad (SH) des Arbeitsfluids tätig ist.

5. Rankine-Zyklussystem (201) nach Anspruch 4, **dadurch gekennzeichnet, dass** das Strömungsregulierungsventil (220) angepasst ist, betätigt zu werden, um geöffnet zu werden, wenn der Druckunterschied kleiner als ein Druckunterschiedbezugswert (Pdt) ist.

6. Rankine-Zyklussystem (201) nach Anspruch 4 oder 5, **dadurch gekennzeichnet, dass** die Öffnung des Strömungsregulierungsventils (220) angepasst ist, mit einem Absinken des Überheizungsgrads (SH) des Arbeitsfluids erhöht zu werden, wenn der Druckunterschied kleiner als der zweite Bezugswert (Pdt) ist, und dabei die Strömungsrate des Arbeitsfluids erhöht wird, das durch den Umgehungsdurchtritt (3) strömt.

7. Rankine-Zyklussystem (101, 201) nach einem der Ansprüche 4 bis 6, **dadurch gekennzeichnet, dass** das Strömungsregulierungsventil (220) hat:
eine Ventilkammer (220C), die in dem Umgehungsdurchtritt (3) bereitgestellt ist, wobei die Ventilkammer (220C) hat:
einen Ventilsitz (220D);
einen Ventilkörper (220A), der derart konfiguriert ist, dass der Umgehungsdurchtritt (3) geschlossen ist, wenn der Ventilkörper (220A) auf dem Ventilsitz (220D) sitzt, und der Umgehungsdurchtritt (3) geöffnet ist, wenn der Ventilkörper (220A) von dem Ventilsitz (220D) wegbewegt wird;
eine erste Feder (220B1), die den Ventilkörper (220A) zu dem Ventilsitz (220D) drängt, um den Ventilkörper (220A) auf den Ventilsitz (220D) zu setzen; und
eine zweite Feder (220B2), die den Ventilkörper (220A) von dem Ventilsitz (220D) wegdrängt,
eine Druckkammer (220E) hat:
eine erste Druckkammer (220E1);
eine zweite Druckkammer (220E2); und
eine Membran (220F), die die Druckkammer (220E) in die erste Druckkammer (220E1) und die zweite Druckkammer (220E2) unterteilt,
eine Verbindungswelle (220G), die sich durch die Ventilkammer (220C) und die Druckkammer (220E) erstreckt und mit dem Ventilkörper (220A) und der Membran (220F) verbunden ist, wobei die Verbindungswelle (220E) durch die zweite Feder (220B2) gedrängt ist.

## Revendications

1. Système à cycle de Rankine (101, 201) pouvant être monté sur un véhicule comprenant :
un circuit à cycle de Rankine (100, 200) à travers lequel un fluide de travail circule, le circuit à cycle de Rankine (100, 200) comportant :
un dispositif de détente de fluide (114) détendant le fluide de travail pour générer du travail ;
un dispositif de transfert de fluide (111) transférant le fluide de travail au dispositif de détente de fluide (114) ;
un premier passage (1) reliant le dispositif de transfert de fluide (111) au dispositif de détente de fluide (114) ;
un deuxième passage (2) reliant le dispositif de détente de fluide (114) au dispositif de transfert de fluide (111) ;
un dispositif de chauffage (112, 113) prévu dans le premier passage (1) pour chauffer le fluide de travail ;
un dispositif de refroidissement (115) prévu dans le deuxième passage (2) pour refroidir le fluide de travail ;
un passage de dérivation (3) reliant le premier passage (1) au deuxième passage (2) ; et
une soupape de régulation de débit (120, 220) prévue dans le passage de dérivation (3) pour ouvrir et fermer le passage de dérivation (3),
un détecteur de pression (121, 222) prévu dans le premier passage (1) pour détecter une pression du fluide de travail ;
un détecteur de température (122, 221) prévu dans le premier passage (1) entre le dispositif de chauffage (112, 113) et le dispositif de détente de fluide (114) pour détecter la température du fluide de travail ; et
une unité de commande (119, 220) reliée à la soupape de régulation de débit (120, 220) pour commander un fonctionnement de la soupape de régulation de débit (120, 220) et au détecteur de pression (121, 222) et au détecteur de température (122, 221) pour recevoir des signaux de pression et de température provenant du détecteur de pression (121, 222) et du détecteur de température (122, 221),
**caractérisé en ce que**
l'unité de commande (119) est adaptée pour commander le fonctionnement de la soupape de régulation de débit (120, 220) sur la base d'un degré de surchauffe (SH) du fluide de travail calculé à partir des signaux du détecteur de pression (121, 222) et du détecteur de température (122, 221), et **en ce que** le passage de dérivation (3) relie le premier passage (1) au deuxième passage (2) entre le dispositif de détente de fluide (114) et le dispositif de refroidissement (115).

2. Système à cycle de Rankine (101) selon la revendication 1, **caractérisé en ce que** l'unité de commande (119) est adaptée pour amener la soupape de régulation de débit (120) à s'ouvrir lorsque le degré de surchauffe (SH) du fluide de travail est inférieur à une valeur de référence de degré de surchauffe (SHt).

3. Système à cycle de Rankine (101) selon la revendication 1 ou 2, **caractérisé en ce que** l'unité de commande (119) est adaptée pour effectuer une commande de sorte que l'ouverture de la soupape de régulation de débit (120) augmente avec la diminution du degré de surchauffe (SH) du fluide de travail lorsque le degré de surchauffe (SH) du fluide de travail est inférieur à la valeur de référence de degré de surchauffe (SHt), ce qui permet d'augmenter un débit du fluide de travail s'écoulant à travers le passage de dérivation (3).

4. Système à cycle de Rankine (201) selon la revendication 1, **caractérisé en ce que** le détecteur de pression (222) est un passage de communication reliant le premier passage (1) à la soupape de régulation de débit (220), le détecteur de température (221) est un cylindre thermosensible relié à la soupape de régulation de débit (220) et adapté pour être rempli d'un fluide thermosensible du même type que le fluide de travail circulant dans le circuit à cycle de Rankine (200) dans une phase de mélange air-liquide, et la soupape de régulation de débit (220) fait office d'unité de commande actionnée sur la base d'une pression différentielle entre une pression du fluide de travail dans le passage de communication et une pression du fluide thermosensible dans le cylindre thermosensible en conformité avec le degré de surchauffe (SH) du fluide de travail.

5. Système à cycle de Rankine (201) selon la revendication 4, **caractérisé en ce que** la soupape de régulation de débit (220) est adaptée pour être actionnée afin de s'ouvrir lorsque la pression différentielle est inférieure à une valeur de référence de pression différentielle (Pdt).

6. Système à cycle de Rankine (201) selon la revendication 4 ou 5, **caractérisé en ce que** l'ouverture de la soupape de régulation de débit (220) est apte à être augmentée avec la diminution du degré de surchauffe (SH) du fluide de travail lorsque la pression différentielle est inférieure à la deuxième valeur de référence (Pdt), ce qui permet d'augmenter le débit du fluide de travail s'écoulant à travers le passage de dérivation (3).

7. Système à cycle de Rankine (101, 201) selon l'une quelconque des revendications 4 à 6, **caractérisé en ce que** la soupape de régulation de débit (220) comporte :
une chambre de soupape (220C) prévue dans le passage de dérivation (3), la chambre de soupape (220C) comportant :
un siège de soupape (220D) ;
un corps de soupape (220A) configuré de sorte que le passage de dérivation (3) soit fermé lorsque le corps de soupape (220A) est assis sur le siège de soupape (220D) et le passage de dérivation (3) soit ouvert lorsque le corps de soupape (220A) est déplacé loin du siège de soupape (220D) ;
un premier ressort (220B1) sollicitant le corps de soupape (220A) vers le siège de soupape (220D) pour asseoir le corps de soupape (220A) sur le siège de soupape (220D) ; et
un deuxième ressort (220B2) sollicitant le corps de soupape (220A) loin du siège de soupape (220D),
une chambre de pression (220E) comporte :
une première chambre de pression (220E1) ;
une deuxième chambre de pression (220E2) ; et
un diaphragme (220F) divisant la chambre de pression (220E) en la première chambre de pression (220E1) et la deuxième chambre de pression (220E2),
un arbre de connexion (220G) s'étendant à travers la chambre de soupape (220C) et la chambre de pression (220E) et relié au corps de soupape (220A) et au diaphragme (220F), l'arbre de connexion (220G) étant sollicité par le deuxième ressort (220B2).
